Europäisches Patentamt

European Patent Office

Office européen des brevets

(11) Veröffentlichungsnummer: **0 139 972**
**A2**

(12) **EUROPÄISCHE PATENTANMELDUNG**

(21) Anmeldenummer: **84109893.2**

(22) Anmeldetag: **20.08.84**

(51) Int. Cl.⁴: **B 29 C 67/22**
**B 29 C 33/38**
**//B29K105:04, B29K23:00**

(30) Priorität: **26.08.83 DE 3330826**

(43) Veröffentlichungstag der Anmeldung:
**08.05.85 Patentblatt 85/19**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Haardt, Udo**
**Darmstaedter Strasse 132**
**D-6843 Biblis(DE)**

(72) Erfinder: **Leggewie, Eike**
**Theodor-Storm-Strasse 2b**
**D-6701 Birkenheide(DE)**

(72) Erfinder: **Grab, Gerhard**
**Erzbergerstrasse 42**
**D-6700 Ludwigshafen(DE)**

(54) **Verfahren zur Herstellung von Schaumstoff-Formkörpern aus Polyolefinen.**

(57) Die Erfindung betrifft ein Verfahren zur Herstellung von Schaumstoff-Formkörpern durch Verschweißen von Polyolefin-Schaumstoffteilchen in geschlossenen Formen, die aus Sintermetall bestehen. Die Formkörper zeichnen sich durch eine einwandfreie glatte Oberfläche aus; sie können als Verpackungsmaterial für empfindliche Güter verwendet werden.

Croydon Printing Company Ltd.

Verfahren zur Herstellung von Schaumstoff-Formkörpern aus Polyolefinen

Es ist bekannt, daß man Schaumstoff-Formkörper aus Polyolefinen herstellen kann, indem man Schaumpartikel in eine nicht gasdicht schließende Form einfüllt, dafür sorgt, daß die Schaumpartikel sich ausdehnen und dabei die Form vollständig ausfüllen, und sie dann durch Erhitzen oberhalb der Erweichungstemperatur des Polyolefins miteinander verschweißt. Derartige Verfahren sind z.B. in den DE-A 1 629 316, 2 363 923, 2 542 452, 2 834 965 und 3 125 024 sowie in der EP-A 75 897 beschrieben. Als Material für die Formen wird gewöhnlich Gußaluminium verwendet; die Zu- und Ableitung von Gasen und Flüssigkeiten in die Form geschieht durch Düsen. Man erhält dabei Formkörper, auch mit sehr komplizierter Gestalt, die sich infolge der Festigkeit, Flexibilität und guten thermischen Isolierwirkung des Schaumstoffs hervorragend als Verpackungsmaterial für hochempfindliche Güter eignet. Es hat sich jedoch gezeigt, daß für manche Anwendungsfälle, insbesondere zum Verpacken von Videobändern, die Qualität der Innenoberfläche der Formkörper nicht ausreichend ist.

Der Erfindung lag daher die Aufgabe zugrunde, Schaumstoff-Formkörper aus Polyolefinen bereitzustellen, die eine einwandfreie glatte, lunkerfreie und praktisch nicht abriebfähige Oberfläche aufweisen.

Es wurde gefunden, daß diese Aufgabe gelöst wird, wenn man das Verschweißen der Polyolefin-Schaumstoffteilchen in Formen vornimmt, die ganz oder überwiegend aus Sintermetall bestehen.

Unter Polyolefine im Rahmen der vorliegenden Erfindung sind Homo- und Copolymerisate von Monoolefinen mit vorzugsweise zwei bis vier Kohlenstoffatomen zu verstehen. Bevorzugt sind Polyethylen, Polypropylen, Copolymerisate des Ethylens und Propylens mit untergeordneten Mengen an Comonomeren, z.B. einem anderen Olefin, Vinylacetat, (Meth-)Acrylsäureester oder Styrol, Auch entsprechende Pfropfcopolymere sind geeignet. Die Schaumstoff-Teilchen weisen im allgemeinen eine Dichte von 15 bis 100, vorzugsweise von 20 bis 80 $g.l^{-1}$ und einen Durchmesser von 2 bis 20, vorzugsweise von 4 bis 12 mm auf. Sie sind weitgehend geschlossenzellig und können eine kugelige, ovale, zylinder-, würfel- oder quaderförmige Gestalt aufweisen.

Derartige Schaumstoffteilchen können nach verschiedenen Verfahren hergestellt werden, die beispielsweise in den oben genannten Druckschriften beschrieben sind. Bei einem bevorzugten Verfahren mischt man in die Schmelze des Polyolefins ein flüssiges oder gasförmiges Treibmittel, z.B.

ein Kohlenwasserstoff oder Halogenkohlenwasserstoff ein und extrudiert das Gemisch durch Lochdüsen, wobei es expandiert. Der erhaltene Schaumstoffstrang wird dann zu Schaumstoffteilchen zerkleinert. Bei einem anderen Verfahren werden Polyolefinteilchen in Wasser suspendiert, mit Treibmitteln imprägniert, vom Wasser abgetrennt und durch Erhitzen verschäumt. Ferner kann man gasförmige, flüssige oder feste Treibmittel, z.B. Azodicarbonamid, in eine Polyolefinschmelze einarbeiten, einen Strang extrudieren, zerkleinern und durch Erhitzen über die Zersetzungstemperatur des Treibmittels verschäumen.

Man kann sowohl unvernetzte als auch teilvernetzte Schaumstoffteilchen verwenden. Die Vernetzung kann vor oder nach dem Verschäumen durch ionisierende Strahlung oder mit Hilfe von chemisch wirkenden Vernetzungsmitteln, wie z.B. Peroxiden, vorgenommen werden.

Die Schaumstoff-Teilchen sind von ihrer Herstellung her mit Treibmittel, z.B. Dichlordifluormethan, gefüllt. Hat man rasch diffundierende Treibmittel verwendet, so wird dieses beim Lagern gegen Luft ausgetauscht. Man kann diesen Gasaustausch durch Behandlung mit anorganischen Gasen, z.B. Luft, Stickstoff oder Kohlendioxid, unter Druck, beschleunigen.

Die Schaumstoff-Teilchen werden in eine Form gefüllt, die so dicht ist, daß die Teilchen daraus nicht entweichen können, jedoch für Gase durchlässig ist. Das Einfüllen in die Form, Expandieren der Teilchen und Verschweißen ist in den oben genannten Druckschriften ausführlich beschrieben. Bei einem bevorzugten Verfahren werden mit Luft gefüllte Teilchen unter Druck z.B. 2 bis 5 bar, gegen einen niedrigeren Staudruck, z.B. 1,5 bis 3,5 bar, in die Form gefördert, wobei sie vor oder während des Einfüllens auf bis zu 20 % ihres ursprünglichen Schüttvolumens komprimiert werden. Dann wird die Form entspannt, wobei die komprimierten Schaumstoff-Teilchen sich wieder ausdehnen und die Form vollständig füllen. Anschließend wird die Verschweißung durch Einleiten von heißen Gasen, z.B. Luft, Stickstoff oder Wasserdampf, in die Form vorgenommen. Zuletzt wird der erhaltene Schaumstoff-Formkörper abgekühlt, z.B. durch Einleiten von Kühlmedien, wie Wasser, in die Form.

Eine weitere Möglichkeit der Formkörperherstellung besteht darin, daß man die Schaumstoff-Teilchen durch Druckbegasung unter Innendruck setzt, in die Form einfüllt, durch Erhitzen gleichzeitig die Expansion der Teilchen und das Verschweißen vornimmt und anschließend wieder abkühlt.

Die Temperatur beim Verschweißen liegt oberhalb der Erweichungstemperatur des Polyolefins; bei Polyethylen niedriger Dichte beträgt sie vorzugsweise 110 bis 135°C, bei Polypropylen 122 bis 148°C.

Erfindungsgemäß soll nun das Material der Form aus Sintermetall bestehen, wobei nicht ausgeschlossen sein soll, einzelne kleinere Teile der Form aus herkömmlichem Material, z.B. Stahl oder Aluminium, anzufertigen.

Sintermetall ist ein bekanntes Material. Es wird hergestellt durch Zusammenwachsen von Metallpulverteilchen bei Temperaturen etwas unterhalb des Schmelzpunktes des Metalls. Als Metalle bzw. Legierungen kommen dabei z.B. in Frage: Bronze, Eisen, Stahl, Nickel, Aluminium und Monelmetall. Es handelt sich um formstabile, metallisch feste Körper, die sich durch ihre Porosität auszeichnen. Diese liegt im allgemeinen zwischen 15 und 50 %, die Porengröße zwischen 0,01 und 1 mm. Bevorzugt im Rahmen der Eefindung sind Sintermetallformen aus Bronze und Chrom-Nickel-Stahl. Bei der erfindungsgemäßen Anwendung ist es zweckmäßig, die innere Oberfläche der Sintermetall-Formen mit einem Trennmittel, z.B. auf Basis von Polytetrafluorethylen oder von Silikonen, zu besprühen, um die Ablösung der Schaumstoff-Formkörper bei der Entnahme aus der Form zu erleichtern.

Ein wesentlicher Vorteil bei der Verwendung von Sintermetall als Material für die Formen liegt darin, daß die Druckbeaufschlagung der Form mit Gasen, das Entspannen, die Beheizung mit Wasserdampf und die Kühlung mit Wasser nicht mehr über Düsen vorgenommen werden muß, sondern direkt durch die Poren des Sintermetalls geschehen kann. Dadurch verringert sich die Zykluszeit erheblich, die Luft- und Dampfverhältnisse in der Form sind gleichmäßiger als bei Formen mit Düsen und es kann mit niedrigerem Druck bedampft werden.

Die erhaltenen Formteile zeichnen sich durch eine hervorragend glatte, gleichmäßige Oberfläche ohne störende Lunker aus. Es bildet sich eine feine Haut aus, so daß die einzelnen Partikel kaum mehr zu erkennen sind.

Beispiel

Zur Herstellung eines zylinderförmigen Formteils mit einem Durchmesser von 360 mm und einer Dicke von 13 mm wird eine entsprechende Hohlform einer Wandstärke von 12 mm aus Sinterbronze verwendet. Die Porosität beträgt 30 %, die Porengröße 0,04 bis 0,08 mm und der Kugeldurchmesser 0,2 bis 0,3 mm. Durch eine Öffnung in der Form werden Schaumkugeln aus Hochdruckpolyethylen einer Dichte von 65 g.l$^{-1}$ mit einem Durchmesser von 6 mm eingefüllt, wobei mit einem Fülldruck von 2,7 bar gegen einen Staudruck von 1,6 bar die Kugeln auf ca. 40 % ihres ursprünglichen Schüttvolumens komprimiert werden. Dann wird auf Atmosphärendruck entspannt, wobei die Schaumstoffkugeln sich wieder ausdehnen und die Form ausfüllen. Sie werden durch Erhitzen von 114°C heißem Wasserdampf bei 1,7 bar mitein-

0139972

ander verschweißt. Der entstandene Formkörper wird schließlich mit kaltem Wasser abgekühlt und aus der Form entnommen. Die Zykluszeit beträgt 124 sec. Der Formkörper hat eine Dichte von 100 $g.l^{-1}$, er weist eine glatte, lunkerfreie Oberfläche auf.

## Patentanspruch

Verfahren zur Herstellung von Schaumstoff-Formkörpern durch Verschweißen von Polyolefin-Schaumstoffteilchen bei Temperaturen oberhalb des Erweichungsbeeichs des Polyolefins in geschlossenen Formen, dadurch gekennzeichnet, daß die Formen ganz oder überwiegend aus Sintermetall bestehen.